# EUROPÄISCHE PATENTSCHRIFT

(11) **EP 2 660 106 B1**
(45) Veröffentlichungstag und Bekanntmachung des Hinweises auf die Patenterteilung: **16.05.2018**
(21) Anmeldenummer: 12193436.8
(22) Anmeldetag: 20.11.2012
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 06.11.2013
(73) Patentinhaber: Metalsa Automotive GmbH, 51702 Bergneustadt (DE)
(72) Erfinder: Hellweg, Hans-Bernd, 53819 Neunkirchen-Seelscheid (DE); Helsper, Michael, 57078 Siegen (DE)
(74) Vertreter: Rebbereh, Cornelia

(56) Entgegenhaltungen:
- EP-A1- 2 239 166
- DE-A1-102009 039 215
- DE-B3- 10 300 790
- DE-C1- 10 044 927
- "ADVERTISEMENT", REVUE TECHNIQUE AUTOMOBILE, ETAI, BOULOGNE-BILLANCOURT, FR, Bd. 45, Nr. 519, 1. September 1990 (1990-09-01), Seite XXXIX, XP000172636, ISSN: 1621-3815

## Beschreibung

Die Erfindung betrifft ein Überrollschutzsystem für Kraftfahrzeuge, mit einer am Kraftfahrzeug anordbaren Aufnahmeeinheit und einem zwischen einer Lagerungsposition und einer Überschlagsposition verstellbar an der Aufnahmeeinheit angeordnetem Überrollkörper.

Überrollschutzsysteme der eingangs genannten Art sind in vielfältigen Ausgestaltungen aus dem Stand der Technik bekannt. Sie dienen bei Kraftfahrzeugen wie Cabriolets oder Roadstern, bei denen das Dach zwischen einer den Innenraum verdeckenden und einer diesen freigebenden Position verstellbar ist, dazu, im Falle eines Überschlags die Fahrzeuginsassen vor Verletzungen zu schützen, in dem sie in der Überschlagsposition den Insassen einen Überlebensraum bereit stellen, wenn das Fahrzeug beim Überschlag auf den aufgestellten Überschlagkörpern abrollt.

Neben starr am Fahrzeug angeordneten Überrollbügeln, welche sich sowohl über die gesamte Fahrzeugbreite erstrecken können, aber auch nur jeweils hinter einem Fahrzeugsitz angeordnet sein können, werden vermehrt sogenannte aktive Überrollschutzsysteme eingesetzt, bei denen sich die Überrollkörper im Normalzustand in einer Lagerungsposition befinden, in der sie von außen nicht sichtbar sind. Eine Verlagerung der Überrollkörper erfolgt nur im Bedarfsfall, nämlich bei einem drohenden Überschlag, wobei dann der Überrollkörper in die Überschlagsposition verstellt wird. In der Überschlagsposition stellt der Überrollkörper in Verbindung mit der Karosserie den für die Insassen nötigen Überlebensraum bereit.

Überrollkörper, bspw. Überrollbügel, Klappbügel oder einfach geformte Profilkörper, die in der Lagerungsposition hinter den Fahrzeugsitzen von außen im Wesentlichen unsichtbar angeordnet sind und sich im Falle eines Überschlags selbsttätig aufstellen, stellen eine bevorzugte Ausführungsform der aktiven Überrollschutzsysteme dar. Zwingende Voraussetzung für die Einsetzbarkeit aller aktiven Systeme ist dabei, dass der Überrollkörper im Bedarfsfall schlagartig in die die Insassen schützende Überschlagsposition verlagert wird.

Die Überrollschutzsysteme weisen dabei mit der Fahrzeugkarosserie verbindbare Aufnahmeeinheiten auf, die eine ortsfeste Anordnung des Überrollschutzsystems an dem Fahrzeug ermöglichen. Darüber hinaus dienen die Aufnahmeeinheiten dazu, auf den Überrollkörper wirkende Belastungen in die Fahrzeugkarosserie zu übertragen. Die Übertragung der auftretenden Belastungen, nämlich in Fahrzeuglängs-, Fahrzeugquer- und/oder Fahrzeughochachsenrichtung macht es erforderlich, die Aufnahmeeinheit entsprechend stabil auszugestalten, was jedoch der grundsätzlichen Anforderung einer Gewichts- sowie Kostenreduzierung im Automobilbau entgegensteht. Das Dokument DE 103 00 790 B3 offenbart ein Überrollschutzsystem für Kraftfahrzeuge gemäß dem Oberbegriff des Anspruchs 1. Der Erfindung liegt die Aufgabe zugrunde, ein Überrollschutzsystem bereitzustellen, dass ein geringes Gewicht aufweist und sich kostengünstig produzieren lässt, wobei das Überrollschutzsystem gleichzeitig eine ausreichend hohe Stabilität zur Übertragung der im Überschlagsfall auftretenden Kräfte besitzt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.
Kennzeichnend für das erfindungsgemäße Überrollschutzsystem ist, dass die Aufnahmeeinheit im Bereich ihrer Endabschnitte zumindest ein außen- und/oder innenseitig angeordnetes Verstärkungselement aufweist.
Die Aufnahmeeinheit dient zur ortsfesten Verbindung des Überrollschutzsystems an der Fahrzeugkarosserie. Im Überschlagsfall stützt sich der Überrollkörper über die Aufnahmeeinheit an der Fahrzeugkarosserie ab. Die Ausgestaltung der Aufnahmeeinheit ist dabei frei wählbar, wobei diese in ihrer einfachsten Ausgestaltung bspw. als einfacher, einwandiger, hohlzylindrischer Körper mit einem den Überrollkörper aufnehmenden Querschnitt ausgebildet sein kann.

Das Verstärkungselement ermöglicht durch seine in Umfangsrichtung der Aufnahmeeinheit betrachtet frei wählbare Anordnung eine lokale Erhöhung der Stabilität der Aufnahmeeinheit gegenüber quer zur Längsachsenrichtung der Aufnahmeeinheit auf diese wirkenden Kräfte. Die Aufnahmeeinheit, die zur Lastaufnahme der auf den Überrollkörper wirkenden Belastungen bei einem Überschlag dient, kann somit in dem verstärkten Bereich die quer zu diesem auf ihn durch den Überrollkörper aufgebrachten Belastungen besonders zuverlässig auf die Fahrzeugkarosserie - mit der die Aufnahmeeinheit verbunden ist - übertragen, ohne dass es zu einem Kolabieren der Aufnahmeeinheit kommt.

Die Anordnung des Verstärkungselements erfolgt dabei im Bereich eines - in Längsachsenrichtung des Überrollkörpers betrachtet - Endabschnitt der Aufnahmeeinheit, welche im Überschlagsfall die Hauptbelastungen des Überrollkörpers aufnimmt, wobei in der Regel der - bezogen auf die Einbaulage am Kraftfahrzeug - obere Endbereich verstärkt ist.

Die erfindungsgemäße Ausgestaltung erlaubt es somit, die Aufnahmeeinheit grundsätzlich gewichtssparend auszuführen und zur Erzielung der erforderlichen Stabilität lediglich die höher belasteten Bereiche mit einem Verstärkungselement zu versehen. Insgesamt kann dadurch das Gesamtgewicht des Überrollschutzsystems besonders gering gehalten werden, zumal die übrigen Bereiche der Aufnahmeeinheit, welche bspw. als den Überrollkörper aufnehmendes Gehäuse ausgebildet sein können, im Überschlagsfall einer geringen Belastung unterliegen und folglich nicht entsprechend der hohen, im Bereich der Endabschnitte im Überschlagsfall auftretenden Belastungen dimensioniert werden müssen.

Die Ausgestaltung des Verstärkungselements, insbesondere dessen Längserstreckung sowie dessen Erstreckung in Umfangsrichtung ist grundsätzlich entsprechend der zu erwartenden Belastungen frei wählbar. So kann das Verstärkungselement bspw. durch einen oder mehrere einfache Formkörper gebildet sein, welche bevorzugt stoff- und/oder formschlüssig mit der Aufnahmeeinheit verbunden sind. Bspw. ist es denkbar, einzelne einfach gestaltete Metallbleche mit der Aufnahmeeinheit, welche bspw. als zylindrisches Rohr ausgebildet sein kann, zu verschweißen und/oder zu verschrauben, um die besonders belasteten Bereich entsprechend zu verstärken.

Nach einer besonders vorteilhaften Ausgestaltung der Erfindung ist jedoch vorgesehen, dass sich das Verstärkungselement über den gesamten Umfang der Aufnahmeeinheit erstreckt. Gemäß dieser Ausgestaltung der Erfindung wird eine homogene Verstärkung des Endabschnitts erreicht, wobei eine geschlossene Struktur des Verstärkungselements zudem dessen Lastaufnahmeeigenschaften verbessert und somit auch die Stabilität der Aufnahmeeinheit gegenüber Druckbelastungen erhöht.
Die Verbindung des Verstärkungselements kann grundsätzlich, wie bereits zuvor beschrieben, in beliebiger Weise erfolgen. Nach einer besonders vorteilhaften Ausgestaltung der Erfindung ist jedoch vorgesehen, dass das Verstärkungselement in die Aufnahmeeinheit ein- und/oder aufsteckbar ist. Gemäß dieser Ausgestaltung der Erfindung ist das Verstärkungselement derart ausgebildet, dass es stirnseitig auf einen Endabschnitt der Aufnahmeeinheit aufgesteckt wird, so dass das Verstärkungselement im montierten Zustand innen- und/oder außenseitig an der Aufnahmeeinheit angeordnet ist. Im Falle einer innenseitigen Anordnung, welche vorteilhafterweise nicht zu einer Bauraumerweiterung führt, ist dabei sicher gestellt, dass der verbleibende Innenbereich der Aufnahmeeinheit nach wie vor eine freie Verlagerbarkeit des Überrollkörpers aus der Lagerungsposition in die Überschlagsposition gewährleistet. Die Aufsteckbarkeit ermöglicht eine einfache und schnelle Montage und gewährleistet darüber hinaus eine zuverlässige Erhöhung der Stabilität der im Überschlagsfall besonders belasteten Bereiche.
Die Ausgestaltung des Verstärkungselements ist ebenfalls im Falle der ein- oder aufsteckbaren Ausgestaltung grundsätzlich frei wählbar. Nach einer besonders vorteilhaften Ausgestaltung der Erfindung ist jedoch vorgesehen, dass das Verstärkungselement eine zylindrische, an die Form der Aufnahmeeinheit angepasste Form aufweist. Gemäß der Erfindung weist das Verstärkungselement im Querschnitt eine an die Querschnittsform der Aufnahmeeinheit im Endabschnitt angepasste Form auf, wodurch umlaufend eine gute Anlage und damit Verstärkung der Aufnahmeeinheit durch das Verstärkungselement gewährleistet wird. Die zylindrische Form kann dabei derart ausgestaltet sein, dass das Verstärkungselement innenseitig und/oder außenseitig quer zur Längsachsenrichtung des Überrollkörpers betrachtet, an der Aufnahmeeinheit anliegt. Durch eine entsprechende Ausgestaltung kann bei Beibehaltung eines geringen Bauraums eine Aufnahmeeinheit geschaffen werden, welche eine besonders hohe Stabilität gegenüber den auftretenden Belastungen aufweist.
Zur Lagesicherung des Verstärkungselements an der Aufnahmeeinheit kann grundsätzlich auf beliebige Befestigungsmöglichkeiten zurückgegriffen werden. So kann das Verstärkungselement mit der Aufnahmeeinheit verschraubt werden oder aber bspw. aufgeschrumpft werden, so dass auf weitere Befestigungsmittel verzichtet werden kann. Nach einer besonders vorteilhaften Ausgestaltung der Erfindung ist vorgesehen, dass das Verstärkungselement einen auf einem Endabschnitt aufliegendes Anschlagelement aufweist. Gemäß dieser Ausgestaltung der Erfindung weist das Verstärkungselement ein sich quer zur Längsachsenrichtung des Überrollkörpers erstreckendes Anschlagelement auf, welches im Falle einer Aufsteckbarkeit die Einstecktiefe bestimmt und somit eine zuverlässige Befestigung und Lagesicherung gewährleistet. Das Anschlagelement kann dabei in beliebiger Form, bspw. durch einzelne Anschlagkörper oder aber als umlaufender Flansch ausgestaltet sein, welcher stirnseitig auf dem Endabschnitt aufliegt.

Das Verstärkungselement kann grundsätzlich einwandig ausgebildet sein, wobei entsprechend der Materialstärke die gewünschte Verstärkung der Aufnahmeeinheit erreicht wird. Nach einer besonders vorteilhaften Ausgestaltung der Erfindung ist jedoch vorgesehen, dass das Verstärkungselement einen durch eine Innenwand und eine Außenwand abgegrenzten Hohlraum aufweist, der zumindest abschnittsweise mit einem sich zwischen der Innenwand und der Außenwand erstreckenden Füllstoff ausgefüllt ist.

Gemäß dieser Ausgestaltung der Erfindung weist das Verstärkungselement zumindest abschnittsweise ein doppelwandiges Profil auf, das zumindest abschnittsweise mit einem Füllstoff ausgefüllt ist. Der Füllstoff bewirkt dabei eine Abstützung der Innenwand und Außenwand des Hohlraums zueinander, wodurch einem Kolabieren des doppelwandigen Profils im Belastungsfall zuverlässig entgegengewirkt wird. Der Füllstoff muss sich dabei nicht über die gesamte Länge oder den gesamten Umfang des Verstärkungselements erstrecken, sondern kann auch auf Bereiche beschränkt werden, auf welche im Überschlagsfall die höchsten Belastungen wirken. Auch kann sich der Hohlraum aus einzelnen, voneinander getrennten Kammern zusammensetzen, die in voneinander abweichender Weise mit Füllstoff ausgefüllt sein können, wobei die abschnittweise Ausfüllung des Hohlraums auch die Möglichkeit bietet, einzelne, den Hohlraum bildende Kammern nicht mit Füllstoff zu befüllen.

Die Verwendung eines Füllstoffs ermöglicht es, die Wände des Verstärkungselements ebenfalls mit besonders geringen Wanddicken, bspw. Blechdicken von 0,5 bis 2 mm auszugestalten, so dass insgesamt die Aufnahmeeinheit ein nur geringes Gewicht aufweist. Die für die Kraftübertragung im Überschlagsfall notwendige Stabilität wird durch den Füllstoff gewährleistet, welcher auf die Bereiche beschränkt werden kann, in denen Belastungen erwartet werden, welche andernfalls zu einer Zerstörung oder Verformung der Aufnahmeeinheit und/oder des Verstärkungselements führen würden. Diese vorteilhafter Weise vorgesehene Ausgestaltung der Erfindung ermöglicht es bspw., das Verstärkungselement als Extrusionskörper mit durchgehend geringer Wanddicke auszugestalten, wobei die höher belasteten Bereiche durch den Füllstoff die erforderliche Stabilität verliehen wird.

Besonders vorteilhafter Weise ist dabei vorgesehen, dass das Verstärkungselement einen doppelwandigen Profilkörper, vorzugsweise mit einem umlaufenden, den Anschlagkörper bildenden Flansch, aufweist.

Der Hohlraum kann sowohl als durchgängiger Hohlraum ausgebildet sein, sich jedoch auch aus einzelnen Kammern zusammensetzen, welche bspw. durch sich zwischen der Innenwand und der Außenwand erstreckende Stege voneinander abgegrenzt sind. Auch kann das Verstärkungselement - in Umfangsrichtung betrachtet - abschnittsweise einwandig ausgestaltet sein, wodurch der Hohlraum ebenfalls unterbrochen wird. Die frei wählbare Ausgestaltung des Verstärkungselement mit doppelwandigen und einwandigen Bereichen ermöglicht es, die Aufnahmeeinheit besonders gewichtssparend sowie mit einem geringen Bauraum auszuführen. Eine doppelwandige Ausgestaltung kann auf die Bereiche beschränkt werden, in denen erhöhte Belastungen zu erwarten sind und welche dann ganz oder teilweise mit einem Füllstoff ausgefüllt sind.

Nach einer vorteilhaften Weiterbildung der Erfindung ist vorgesehen, dass mindestens zwei Bereiche des ausgefüllten Hohlraums durch ein Zug-/ Druckelement verbunden sind. Die Verwendung eines Zug-/Druckelements, welches üblicherweise zwei gegenüberliegend zum Überrollkörper angeordnete Bereiche des Hohlraums verbindet, ermöglicht es, die Lastaufnahmeeigenschaften der durch den Überrollkörper druckbelasteten Bereiche zu steigern. Über das Zug-/Druckelement können die auftretenden Druckbelastungen als Zugbelastungen auf die den druckbelasteten Bereichen gegenüberliegenden Bereiche übertragen werden. Die Ausgestaltung des Zug-/Druckelements ist dabei grundsätzlich frei wählbar. So kann dies bspw. durch einen einfachen Metallkörper, bspw. ein Metallstab oder -strebe gebildet sein, welcher über zwei im Abstand voneinander angeordnete Schrauben, Stifte oder Bolzen mit zwei im Abstand voneinander angeordneten Bereichen des ausgefüllten Hohlraums verbunden sind. Das Zug-/Druckelement kann auch als Hybridbauteil ausgeführt werden, bei dem ein Metallbauteil in einen Kunststoffkörper eingebettet ist, bspw. durch Umspritzen eines Metalleinlegers. Somit kann in besonders einfacher und kostengünstiger Weise die Lastaufnahmefähigkeit der Aufnahmeeinheit gesteigert werden.

Als Füllstoff können grundsätzlich beliebige Materialien verwendet werden, welche eine ausreichende Abstützung gewährleisten. So könnte als Füllstoff bspw. auch ein Metallschaum oder -granulat verwendet werden, welcher an geeigneter Stell in dem Hohlraum platziert wird. Auch kann der Füllstoff in loser, bspw. schüttfähiger Form vorliegen, sofern gewährleistet ist, dass der eingefüllte Füllstoff in der für ihn vorgesehenen Position lagegesichert ist.

Nach einer besonders vorteilhaften Ausgestaltung der Erfindung ist jedoch vorgesehen, dass der Füllstoff durch einen Kunststoff, insbesondere einen Kunststoffkörper gebildet ist. Die Verwendung eines Kunststoffs als Füllstoff zeichnet sich dabei dadurch aus, dass dieser bei einem geringen Gewicht eine hohe Druckfestigkeit, in Abhängigkeit von der Materialauswahl, aufweisen kann. Die vielfältigen erhältlichen, verwendbaren Kunststoffe ermöglichen es dabei, die Aufnahmeeinheit in optimaler Weise mit der geforderten Druckfestigkeit auszugestalten. So kann der Kunststoff, bzw. der Kunststoffkörper neben der geforderten Druckfestigkeit ferner Dämpfungseigenschaften aufweisen, die es ermöglichen, im Falle eines Überschlagsfalls, die bei einem Kopfaufprall auf den Überrollkörper wirkende Belastungen durch Verformung des Verstärkungselements, bzw. Kompression des Füllstoffs abzubauen, wodurch entsprechende Verletzungen in erheblichem Maße reduziert werden können. Die Kompressionsfähigkeit lässt sich dabei in einfacher Weise über die Auswahl des Kunststoffs einstellen.

Der Füllstoff, insbesondere Kunststoffkörper kann dabei in beliebiger Weise ausgebildet sein, sich auch aus einzelnen, separaten Füllstoffelementen, insbesondere Kunststoffelementen zusammensetzen, welche einzeln in ggf. vorhandenen einzelnen Kammern des Hohlraums eingesetzt werden. Nach einer besonders vorteilhaften Ausgestaltung der Erfindung ist jedoch vorgesehen, dass der Füllstoff, insbesondere Kunststoffkörper durch einzelne an einem Träger angeordnete Füllstoffelemente, insbesondere Kunststoffelemente gebildet ist. Die Anordnung der Füllstoff-/Kunststoffelemente an dem Träger erfolgt entsprechend der Ausrichtung ggf. vorhandener einzelner Kammern des Hohlraums, so dass bei einer entsprechenden Ausgestaltung der Erfindung eine einfache Montage des Füllstoffs, vorzugsweise Kunststoffkörpers an dem Verstärkungselement möglich ist. Der Träger, welcher bspw. durch eine einfache Kunststoffplatte gebildet sein kann, kann darüber hinaus derart ausgestaltet sein, dass er umlaufend einenends an dem Verstärkungselement aufliegt und somit dieses vor dem Eindringen von Feuchtigkeit oder Verschmutzungen schützt und auch zur Lagesicherung dient.

Gemäß einer vorteilhaften Weiterbildung der Erfindung kann der Träger ferner auch als Zug-/Druckelement ausgebildet sein, wobei besonders vorteilhafterweise der Träger durch ein Metall-Kunststoff-Hybridbauteil gebildet ist, bei dem in einen Kunststoff eine Metallplatte oder Metalleinleger eingebettet ist.

Neben der Einbringung des Füllstoffs durch das Einstecken geeigneter Körper sowie der Verwendung eines schüttfähigen Gutes ist nach einer weiteren Ausgestaltung der Erfindung vorgesehen, dass der Hohlraum, bzw. einzelne Kammern des Hohlraums zur Bildung des Kunststoffkörpers mit flüssigem Kunststoff ausgegossen sind. Diese Ausgestaltung der Erfindung gewährleistet eine besonders homogene Verteilung des Kunststoffs in dem Hohlraum, wodurch auch eine besonders zuverlässige Abdichtung des Hohlraums gegenüber äußeren Einflüssen sowie eine gute Abstützung von Innenwand zu Außenwand erreicht wird.

Nach einer alternativen vorteilhaften Weiterbildung der Erfindung ist der Füllstoff, insbesondere Kunststoffkörper in den Hohlraum eingesteckt. Diese Ausgestaltung der Erfindung weist gegenüber der vorteilhafter Weise vorgesehenen Ausgestaltung, wonach der Hohlraum mit flüssigem Kunststoff ausgegossen wird, einen geringeren Montageaufwand auf, so dass sich das Verstärkungselement besonders kostengünstig herstellen lässt.

Die Festlegung des Füllstoffs, insbesondere Kunststoffkörpers an dem Verstärkungselement kann grundsätzlich in beliebiger Weise erfolgen. Nach einer besonders vorteilhaften Ausgestaltung der Erfindung ist jedoch vorgesehen, dass der Füllstoff, insbesondere Kunststoffkörper kraft- und/oder stoffschlüssig mit dem Verstärkungselement verbunden ist. Eine entsprechende Ausgestaltung gewährleistet eine zuverlässige und sichere Anordnung, bspw. des Kunststoffkörpers, wobei gleichzeitig ein nur geringer Montageaufwand erforderlich ist. Eine kraftschlüssige Anordnung kann bspw. durch ein geringes Übermaß des Füllstoffs bzw. Kunststoffkörpers erreicht werden, so dass im montierten Zustand eine elastische Verformung eine zuverlässige Anordnung gewährleistet. Ergänzend zur kraftschlüssigen Anordnung oder alternativ hierzu kann der Füllstoff oder Kunststoffkörper stoffschlüssig, bspw. durch Verkleben, mit dem Verstärkungselement verbunden werden, wodurch ebenfalls eine zuverlässige Anordnung gewährleistet ist. Zur Erleichterung der Montage können zudem Einlaufschrägen vorgesehen werden, so dass insgesamt eine einfache und kostengünstige Montage des Füllstoffs oder Kunststoffkörpers durchgeführt werden kann.

Alternativ zur vorzugsweise vorgesehenen kraft- und/oder stoffschlüssigen Anordnung des Füllstoffs, insbesondere Kunststoffs oder aber zusätzlich zu einer derartigen Anordnung ist nach einer Weiterbildung der Erfindung vorgesehen, dass der Füllstoff, insbesondere Kunststoffkörper verschraubt ist. Eine derartige Lagesicherung zeichnet sich durch seine besonders hohe Positionssicherheit aus, welche die Funktion des Überrollschutzsystems in zuverlässiger Weise gewährleistet. Auch Bolzen oder Stifte können zur Lagesicherung verwendet werden.

Wie bereits eingangs dargestellt, kann der Füllstoff grundsätzlich beliebig ausgestaltet sein. Bereits die Verwendung eines Kunststoffs gemäß einer Weiterbildung der Erfindung weist die zuvor beschriebenen Vorteile auf. Die Ausgestaltung des Kunststoffkörpers ist dabei, wie ebenfalls zuvor dargelegt, frei wählbar, wobei die vielfältigen, unterschiedlichen Kunststoffe verschiedenste Möglichkeiten zur Ausgestaltung des Kunststoffkörpers und dessen Eigenschaften bieten. Denkbar ist beispielsweise auch die Verwendung faserverstärkter Kunststoffe mit entsprechend festigkeitssteigenden Eigenschaften.

Nach einer besonders vorteilhaften Ausgestaltung der Erfindung ist vorgesehen, dass der Füllstoff, insbesondere Kunststoffkörper senkrecht zur Verstellrichtung des Überrollkörpers betrachtet, Bereiche unterschiedlicher Festigkeit aufweist. Gemäß dieser Ausgestaltung der Erfindung weist der Füllstoff bzw. Kunststoffkörper, von der Außenwand zur Innenwand betrachtet, Bereiche mit unterschiedlichen Festigkeitseigenschaften auf, so dass bspw. die Möglichkeit besteht, den Kunststoffkörper im Kontaktbereich mit der In- und/oder Außenwand elastischer auszugestalten, als den übrigen Bereich des Kunststoffkörpers. Hierdurch besteht die Möglichkeit der Aufnahmeeinheit definierte Verformungseigenschaften bereitzustellen, welche den Abbau von im Falle eines Kopfaufpralls auf den Überrollkörper wirkenden und auf die Aufnahmeeinheit übertragenden Belastungen durch Verformung ermöglicht.

Die Ausgestaltung des Füllstoffs, insbesondere Kunststoffkörpers derart, dass dieser Bereiche unterschiedlicher Festigkeit aufweist, ist grundsätzlich frei wählbar. Nach einer vorteilhaften Ausgestaltung der Erfindung ist vorgesehen, dass der Kunststoffkörper hierzu aus zwei oder mehreren Kunststoffen unterschiedlicher Festigkeiten gebildet ist, welche die Bereiche unterschiedlicher Festigkeit des Kunststoffkörpers bilden. Auch ist es gemäß einer vorteilhaften Weiterbildung möglich, den Füllstoff, insbesondere Kunststoffkörper außenseitig mit Rippen zu versehen, die besonders bevorzugt aus einem gegenüber dem übrigen Füllstoff, insbesondere Kunststoffkörper abweichenden, insbesondere weicheren Kunststoff gebildet sind. Eine entsprechende Ausgestaltung der Erfindung gewährleistet zum einen eine gute kraftschlüssige Verbindung des bspw. Kunststoffkörpers an dem Verstärkungselement und gewährleistet überdies gleichzeitig gute Dämpfungseigenschaften zur Reduzierung der Kopfbelastung im Falle eines Aufpralls auf den Überrollkörper.

Nach einer weiteren Ausgestaltung der Erfindung kann die Aufnahmeeinheit auch dadurch mit Bereichen unterschiedlicher Festigkeit - senkrecht zur Verstellrichtung des Überrollkörpers betrachtet - versehen werden, in dem der Füllstoff, insbesondere Kunststoffkörper zusätzliche Hohlräume aufweist, welche im Bereich zwischen der Innenwand und der Außenwand angeordnet sind.

Ausführungsbeispiele der Erfindung werden nachstehend mit Bezug auf die Zeichnungen näher erläutert. In den Zeichnungen zeigen:
- Fig. 1: in einer skizzierten Darstellung eine perspektivische Ansicht einer Aufnahmeeinheit mit daran verschiebbar angeordnetem Überrollkörper;
- Fig. 2: eine perspektivische Darstellung eines in eine Aufnahmeeinheit einsteckbaren Verstärkungselements;
- Fig. 3: eine zweite perspektivische Darstellung des Verstärkungselements von Fig. 2;
- Fig. 4: eine dritte perspektivische Darstellung des Verstärkungselements aus Fig. 2 und
- Fig. 5: eine perspektivische Darstellung einer zweiten Ausführungsform eines Verstärkungselements.

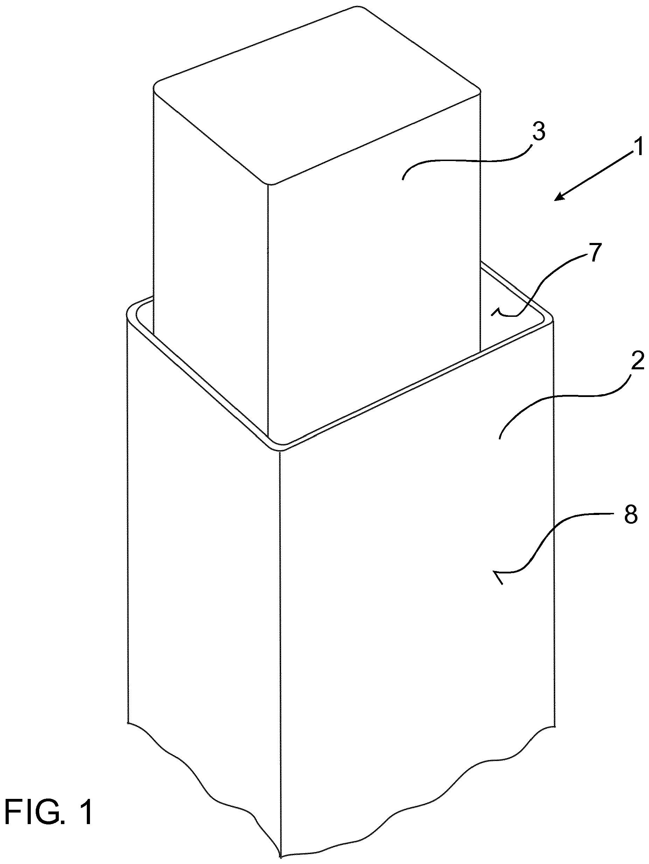

In Fig. 1 ist eine grundsätzliche Ausführungsform eines Überrollschutzsystems 1 mit einer Aufnahmeeinheit 2 und einem daran verstellbaren Überrollkörper 3 skizziert. Im Fall eines Überschlags kann der Überrollkörper 3 relativ gegenüber der Aufnahmeeinheit 2 aus einer Lagerungsposition, in der der Überrollkörper 3 weitestgehend innerhalb der Aufnahmeeinheit 2 angeordnet ist, in eine Überschlagsposition verstellt werden, in der der Überrollkörper 3 aus der Aufnahmeeinheit 2 herausragt.

Die Aufnahmeeinheit 2 wird in der Einbaulage des Überrollschutzsystems 1 mit einer hier nicht dargestellten Fahrzeugkarosserie verbunden, so dass im Überschlagsfall auf den Überrollkörper 3 quer zur Längsachsenrichtung wirkende Kräfte über die Aufnahmeeinheit 2 auf die Fahrzeugkarosserie übertragen werden.

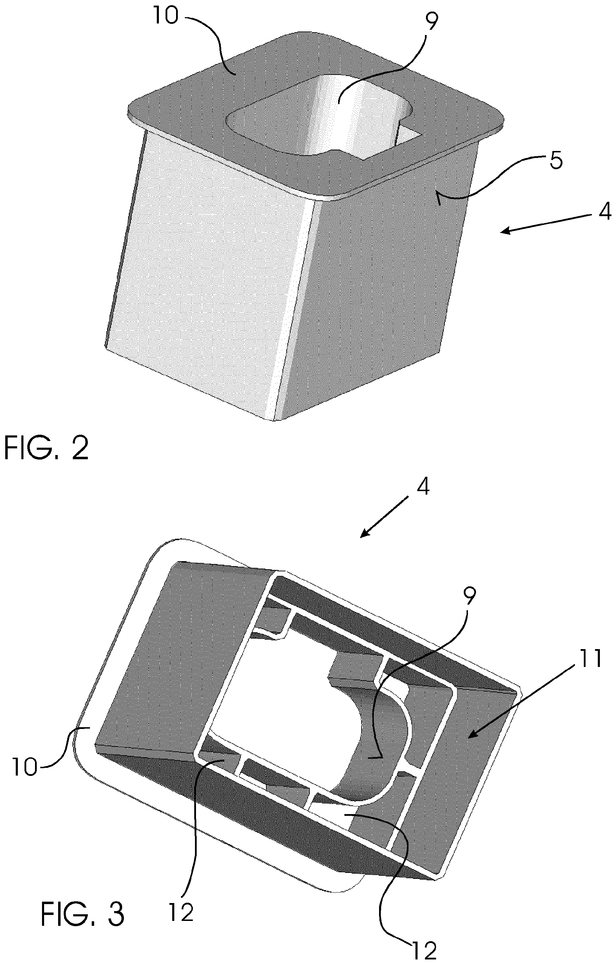

Um im Überschlagsfall die Stabilität der Aufnahmeeinheit 2 zu steigern, ist diese zur Aufnahme eines in Fig.2 bis 4 dargestellten Verstärkungselements 4 ausgebildet. Das Verstärkungselement 4 erstreckt sich in Längsachsenrichtung des Überrollkörpers 3 betrachtet über einen Längsabschnitt innerhalb der Aufnahmeeinheit 2 und liegt mit einem Flansch 10 auf dem umlaufenden Rand der Aufnahmeeinheit 2 auf. In der Einbaulage befindet sich die Außenwand 5 des Verstärkungselements 4 in Anlage an der Innenseite 7 der Aufnahmeeinheit 2, wodurch die Aufnahmeeinheit 2 partiell verstärkt ist. Im Überschlagsfall auf den Überrollkörper 3 wirkende Belastungen werden von dem Überrollkörper 3 über die Innenseite der Öffnung 9 des Verstärkungselements 4 auf die Aufnahmeeinheit 2 übertragen, wobei das Verstärkungselement 4 die Belastungsfähigkeit der Aufnahmeeinheit 2 in erheblichem Maße steigert. Die Aufnahmeeinheit 4 weist dabei ein sich in Längsachsenrichtung erstreckendes doppelwandiges Profil 11 auf, wobei das doppelwandige Profil 11 mit einer Außenwand in Wirkverbindung mit der Innenseite der Aufnahmeeinheit 2 und seiner Innenwand eine Öffnung 9 bildet, die im Überschlagsfall mit dem Überrollkörper 3 zur Lastübertragung zusammenwirkt (vgl. Fig. 2, 3).

Zur Erhöhung der Stabilität sind die einzelnen Kammern 12 des doppelwandigen Profils 11 mit einem hier nicht dargestellten Kunststoff ausgefüllt, wodurch die Innenwand und Außenwand des doppelwandigen Profils 11 gegeneinander abgestützt sind.

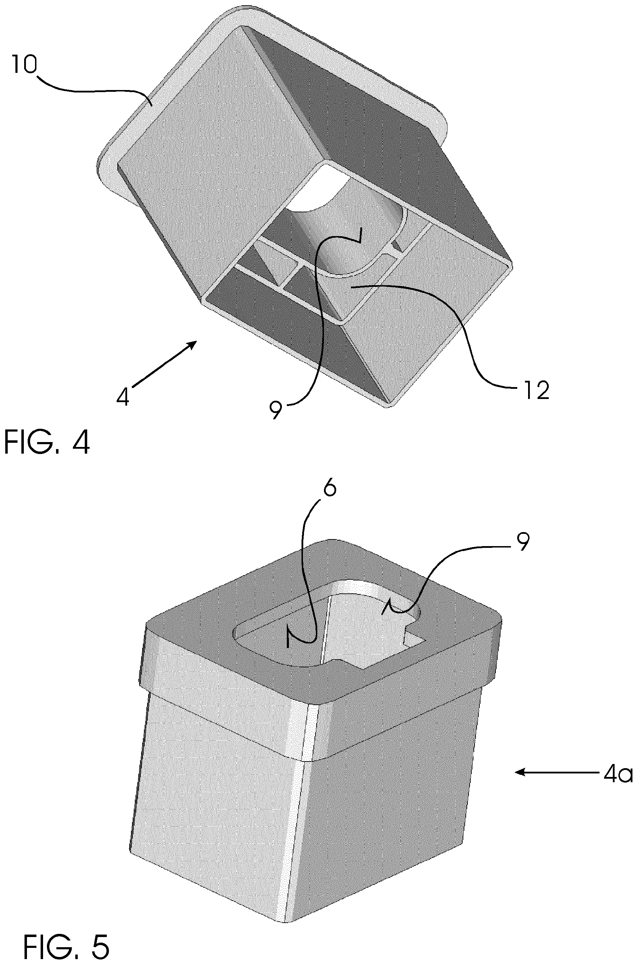

Eine zweite Ausführungsform eines Verstärkungselements 4a ist in Fig. 5 dargestellt. Dieses unterscheidet sich von dem in den Fig. 2 bis 4 dargestellten Verstärkungselement 4 dadurch, dass dieses auf die Aufnahmeeinheit 2 derart aufgesteckt ist, dass das Verstärkungselement 4a mit einer Innenwand 6 an einer Außenseite 8 der Aufnahmeeinheit anliegt. Auch das Verstärkungselement 4a bietet eine partielle Verstärkung der Aufnahmeeinheit 2, so dass diese im Überschlagsfall die auftretenden Belastungen zuverlässig auf die Fahrzeugkarosserie übertragen kann.

### Bezugszeichenliste

- 1: Überrollschutzsystems
- 2: Aufnahmeeinheit
- 3: Überrollkörper
- 4, 4a: Verstärkungselements
- 5: Außenwand
- 6: Innenwand
- 7: Innenseite
- 8: Außenseite
- 9: Öffnung
- 10: Flansch
- 11: doppelwandiges Profil
- 12: Kammer

## Patentansprüche

1. Überrollschutzsystem (1) für Kraftfahrzeuge, mit
- einer am Kraftfahrzeug anordbaren Aufnahmeeinheit (2), die zur ortsfesten Verbindung des Überrollschutzsystems an einer Fahrzeugkarosserie des Kraftfahrzeugs dient, und
- einem zwischen einer Lagerungsposition und einer Überschlagsposition verstellbar an der Aufnahmeeinheit (2) angeordnetem Überrollkörper (3),
**dadurch gekennzeichnet, dass**
die Aufnahmeeinheit (2) im Bereich ihrer Endabschnitte zumindest ein außen- und/oder innenseitig angeordnetes Verstärkungselement (4, 4a) aufweist, das im Querschnitt eine an die Querschnittsform der Aufnahmeeinheit (2) angepasste Form aufweist, um eine gute Anlage und damit Verstärkung der Aufnahmeeinheit (2) durch das Verstärkungselement (4,4a) zu gewährleisten, wobei eine Innenwand des Verstärkungselements (4,4a) eine Öffnung (9) bildet zur Aufnahme des Überrollkörpers (3) und das Verstärkungselement (4) zumindest abschnittsweise einen doppelwandigen Profilkörper aufweist.

2. Überrollschutzsystem nach Anspruch 1, **dadurch gekennzeichnet, dass** sich das Verstärkungselement (4, 4a) über den gesamten Umfang der Aufnahmeeinheit (2) erstreckt.

3. Überrollschutzsystem nach Anspruch 1 oder 2, **dadurch gekennzeichnet, dass** das Verstärkungselement (4, 4a) mehrere mit der Aufnahmeeinheit (2) verbundene Verstärkungskörper aufweist.

4. Überrollschutzsystem nach einem der vorhergehenden Ansprüche, **dadurch gekennzeichnet, dass** das Verstärkungselement (4, 4a) in die Aufnahmeeinheit (2) ein- und/oder aufsteckbar ist.

5. Überrollschutzsystem nach einem der vorhergehenden Ansprüche, **dadurch gekennzeichnet, dass** das Verstärkungselement (4, 4a) eine zylindrische, an die Form der Aufnahmeeinheit (2) angepasste Form aufweist.

6. Überrollschutzsystem nach einem der vorhergehenden Ansprüche, **dadurch gekennzeichnet, dass** das Verstärkungselement (4, 4a) ein auf einem Endabschnitt aufliegendes Anschlagelement (10) aufweist.

7. Überrollschutzsystem nach einem der vorhergehenden Ansprüche, **dadurch gekennzeichnet, dass** das Verstärkungselement (4, 4a) einen durch eine Innenwand und eine Außenwand abgegrenzten Hohlraum aufweist, der zumindest abschnittweise mit einem sich zwischen der Innenwand und der Außenwand erstreckenden Füllstoff ausgefüllt ist.

8. Überrollschutzsystem nach einem der vorhergehenden Ansprüche, **dadurch gekennzeichnet, dass** das Verstärkungselement (4, 4a) einen doppelwandigen Profilkörper (11), vorzugsweise mit einem umlaufenden den Anschlagkörper bildenden Flansch aufweist.

9. Überrollschutzsystem nach Anspruch 7, **gekennzeichnet durch** ein mindestens zwei Bereiche des ausgefüllten Hohlraums verbindendes Zug-/ Druckelement.

10. Überrollschutzsystem nach Anspruch 7, **dadurch gekennzeichnet, dass** der Füllstoff durch einen Kunststoff, insbesondere einen Kunststoffkörper gebildet ist.

11. Überrollschutzsystem nach Anspruch 7 oder 10, **dadurch gekennzeichnet, dass** der Füllstoff, insbesondere Kunststoffkörper senkrecht zur Verstellrichtung des Überrollkörpers (3) betrachtet, Bereiche unterschiedlicher Festigkeit aufweist.

12. Überrollschutzsystem nach einem der vorhergehenden Ansprüche 7, 10 oder 11, **dadurch gekennzeichnet, dass** der Füllstoff, insbesondere Kunststoffkörper aus zwei oder mehreren Kunststoffen unterschiedlicher Festigkeit gebildet ist.

13. Überrollschutzsystem nach einem der vorhergehenden Ansprüche, **dadurch gekennzeichnet, dass** der Füllstoff, insbesondere Kunststoffkörper außenseitig angeordnete Rippen aufweist, die besonders bevorzugt aus einem gegenüber dem übrigen Kunststoffkörper abweichenden, insbesondere weicheren Kunststoff gebildet sind.

14. Überrollschutzsystem nach einem der vorhergehenden Ansprüche, **dadurch gekennzeichnet, dass** der Füllstoff, insbesondere Kunststoffkörper Hohlräume aufweist.

## Claims

1. Rollover protection system (1) for motor vehicles, comprising
- a receiving unit (2) which can be arranged on the motor vehicle and which serves for fixed connection of the rollover protection system to a vehicle body of the motor vehicle, and
- a rollover body (3) arranged adjustably on the receiving unit (2) between a storage position and a rollover position,
**characterised in that**
the receiving unit (2) has in the region of its end portions at least one reinforcing element (4, 4a) arranged on the outside and/or inside, which element has, in cross section, a shape adapted to the cross-sectional shape of the receiving unit (2), in order to ensure a good contact and thus reinforcement of the receiving unit (2) by the reinforcing element (4, 4a), an inner wall of the reinforcing element (4,4a) forming an opening (9) for receiving the rollover body (3) and the reinforcing element (4) having, at least in portions, a double-walled profile body.

2. Rollover protection system according to Claim 1, **characterised in that** the reinforcing element (4, 4a) extends over the entire circumference of the receiving unit (2) .

3. Rollover protection system according to Claim 1 or 2, **characterised in that** the reinforcing element (4, 4a) has a plurality of reinforcing bodies connected to the receiving unit (2).

4. Rollover protection system according to one of the preceding claims, **characterised in that** the reinforcing element (4, 4a) can be plugged into and/or onto the receiving unit (2).

5. Rollover protection system according to one of the preceding claims, **characterised in that** the reinforcing element (4, 4a) has a cylindrical shape adapted to the shape of the receiving unit (2).

6. Rollover protection system according to one of the preceding claims, **characterised in that** the reinforcing element (4, 4a) has a stop element (10) lying on an end portion.

7. Rollover protection system according to one of the preceding claims, **characterised in that** the reinforcing element (4, 4a) has a hollow space delimited by an inner wall and an outer wall, which space is filled at least in portions with a filling material extending between the inner wall and the outer wall.

8. Rollover protection system according to one of the preceding claims, **characterised in that** the reinforcing element (4, 4a) has a double-walled profile body (11), preferably with a flange, running all the way round, forming the stop body.

9. Rollover protection system according to Claim 7, **characterised by** a tension/compression element connecting at least two regions of the filled hollow space.

10. Rollover protection system according to Claim 7, **characterised in that** the filling material is formed by a plastic, in particular a plastic body.

11. Rollover protection system according to Claim 7 or 10, characterised the filling material, in particular plastic body, has regions of different strength, viewed perpendicularly to the adjusting direction of the rollover body (3).

12. Rollover protection system according to one of the preceding Claims 7, 10 or 11, **characterised in that** the filling material, in particular plastic body, is formed from two or more plastics of different strength.

13. Rollover protection system according to one of the preceding claims, **characterised in that** the filling material, in particular plastic body, has ribs arranged on the outside which are formed particularly preferably from a, in particular softer, plastic differing from the rest of the plastic body.

14. Rollover protection system according to one of the preceding claims, **characterised in that** the filling material, in particular plastic body, has hollow spaces.

## Revendications

1. Système de protection contre les tonneaux (1) pour des véhicules automobiles, avec
- une unité de réception (2) pouvant être placée sur le véhicule automobile qui sert au raccordement fixe du système de protection contre les tonneaux à une carrosserie de véhicule du véhicule automobile, et
- un corps de protection contre les tonneaux (3) disposé de manière réglable sur l'unité de réception (2) entre une position de stockage et une position de capotage,
**caractérisé en ce que**
l'unité de réception (2) présente dans la zone de ses sections d'extrémité au moins un élément de renforcement (4, 4a) disposé côté extérieur et/ou intérieur qui présente en section transversale une forme adaptée à la forme de section transversale de l'unité de réception (2) afin de garantir un bon appui et ainsi un bon renforcement de l'unité de réception (2) par l'élément de renforcement (4, 4a), dans lequel une paroi intérieure de l'élément de renforcement (4, 4a) forme une ouverture (9) pour la réception du corps de protection contre les tonneaux (3) et l'élément de renforcement (4) présente au moins par sections un corps profilé à double paroi.

2. Système de protection contre les tonneaux selon la revendication 1, **caractérisé en ce que** l'élément de renforcement (4, 4a) s'étend sur la périphérie entière de l'unité de réception (2).

3. Système de protection contre les tonneaux selon la revendication 1 ou 2, **caractérisé en ce que** l'élément de renforcement (4, 4a) présente plusieurs corps de renforcement raccordés à l'unité de réception (2).

4. Système de protection contre les tonneaux selon l'une quelconque des revendications précédentes, **caractérisé en ce que** l'élément de renforcement (4, 4a) peut être enfiché et/ou enfilé dans l'unité de réception (2).

5. Système de protection contre les tonneaux selon l'une quelconque des revendications précédentes, **caractérisé en ce que** l'élément de renforcement (4, 4a) présente une forme cylindrique, adaptée à la forme de l'unité de réception (2).

6. Système de protection contre les tonneaux selon l'une quelconque des revendications précédentes, **caractérisé en ce que** l'élément de renforcement (4, 4a) présente un élément de butée (10) reposant sur une section d'extrémité.

7. Système de protection contre les tonneaux selon l'une quelconque des revendications précédentes, **caractérisé en ce que** l'élément de renforcement (4, 4a) présente un espace creux délimité par une paroi intérieure et une paroi extérieure qui est rempli au moins par sections avec une matière de remplissage s'étendant entre la paroi intérieure et la paroi extérieure.

8. Système de protection contre les tonneaux selon l'une quelconque des revendications précédentes, **caractérisé en ce que** l'élément de renforcement (4, 4a) présente un corps profilé (11) à double paroi, de préférence avec une bride tournante formant le corps de butée.

9. Système de protection contre les tonneaux selon la revendication 7, **caractérisé par** un élément de traction et de pression raccordant au moins deux zones de l'espace creux rempli.

10. Système de protection contre les tonneaux selon la revendication 7, **caractérisé en ce que** la matière de remplissage est formée par une matière plastique, en particulier un corps en matière plastique.

11. Système de protection contre les tonneaux selon la revendication 7 ou 10, **caractérisé en ce que** la matière de remplissage, en particulier le corps en matière plastique, présente, considérée perpendiculairement au sens de réglage du corps de protection contre les tonneaux (3), des zones à résistance différente.

12. Système de protection contre les tonneaux selon l'une quelconque des revendications précédentes 7, 10 ou 11, **caractérisé en ce que** la matière de remplissage, en particulier le corps en matière plastique est constitué de deux ou de plusieurs matières plastiques à résistance différente.

13. Système de protection contre les tonneaux selon l'une quelconque des revendications précédentes, **caractérisé en ce que** la matière de remplissage, en particulier le corps en matière plastique présente des nervures disposées côté extérieur qui sont constituées particulièrement de préférence d'une matière plastique divergeant par rapport au corps en matière plastique restant, en particulier plus molle.

14. Système de protection contre les tonneaux selon l'une quelconque des revendications précédentes, **caractérisé en ce que** la matière de remplissage, en particulier le corps en matière plastique présente des espaces creux.
